# EUROPÄISCHE PATENTSCHRIFT

(11) **EP 1 676 738 B1**
(45) Veröffentlichungstag und Bekanntmachung des Hinweises auf die Patenterteilung: **04.03.2009**
(21) Anmeldenummer: 05027703.7
(22) Anmeldetag: 17.12.2005
(51) Int. Cl.: B60W 20/00, B60W 10/26

(54) **Verfahren und Vorrichtung zum Betreiben eines Hybridenergiespeichers in einem Fahrzeug mit einem Hybridantriebsystem**
Method and apparatus for control of hybrid energy storage in a hybrid vehicle
Méthode et dispositif de commande pour les moyens de stockage d'énergie électrique pour un véhicule hybride

(30) Priorität: 28.12.2004 DE 102004062938
(43) Veröffentlichungstag der Anmeldung: 05.07.2006
(73) Patentinhaber: Volkswagen Aktiengesellschaft, 38436 Wolfsburg (DE); Skoda Auto a.s., 293 60 Mlada Boleslav (CZ)
(72) Erfinder: Zillmer, Michael, 38173 Sickte (DE); Holz, Matthias, 38165 Lehre (DE); Pott, Ekkehard, 38518 Gifhorn (DE); Prochazka, David, 50745 Libosovice (CZ)

(56) Entgegenhaltungen:
- EP-A- 1 247 979
- EP-A- 1 424 494
- DE-A1- 4 344 053
- DE-A1- 10 213 105
- US-B1- 6 465 977

## Beschreibung

Die Erfindung betrifft ein Verfahren und eine Vorrichtung zum Betreiben eines Hybridenergiespeichers, der eine Batterie und einen Kondensatorspeicher umfasst, die über einen Schalter parallel verbunden sind, mittels dessen die Batterie von einem Anschluss des Hybridenergiespeichers abtrennbar ist, in einem Fahrzeug mit einem Hybridantriebssystem, das einen Verbrennungsmotor und eine Elektromaschine umfasst, mittels eines Steuergeräts.

Ein Antriebssystem, das zwei Antriebseinheiten umfasst, die auf unterschiedliche Weise die Leistung für den Fahrzeugantrieb bereitstellen, nennt man Hybridantriebssysteme. Fahrzeuge mit einem solchen Hybridantriebssystem werden Hybridfahrzeuge genannt. Am weitesten verbreitet sind Hybridantriebssysteme, die einen Verbrennungsmotor und mindestens eine Elektromaschine umfassen. Diese beiden Antriebseinheiten ergänzen sich besonders gut. Eine Verbindung der Elektromaschine mit dem Verbrennungsmotor kann auf unterschiedliche Arten erfolgen. Die Elektromaschine kann direkt oder über eine Kupplung mit der Kurbelwelle des Verbrennungsmotors verbunden oder über einen Riemenantrieb oder ein Getriebe angekoppelt sein. Neben seriellen Hybridkonzepten, bei denen der Antrieb grundsätzlich über die Elektromaschine erfolgt und der Verbrennungsmotor über einen Generator den elektrischen Strom für die Aufladung eines Energiespeichers bzw. für eine direkte Speisung der Elektromaschine erzeugt, werden heute parallele und leistungsverzweigte Hybridkonzepte bevorzugt, bei denen der Fahrzeugantrieb sowohl mit dem Verbrennungsmotor als auch mit der Elektromaschine bewirkt werden kann. Der Aufbau von Hybridantriebssystemen, die einen Verbrennungsmotor und eine Elektromaschine umfassen, ist Fachleuten grundsätzlich bekannt.

Hybridfahrzeuge verfügen über einen Energiespeicher zum Speichern elektrischer Energie, die zum Speisen der Elektromaschine verwendet werden kann. Die Fähigkeit, elektrische Energie in einem Energiespeicher zu speichern, ist eine wichtige Voraussetzung dafür, dass Hybridfahrzeuge gegenüber herkömmlichen Fahrzeugen einen geringeren Kraftstoffverbrauch aufweisen. Der geringere Kraftstoffverbrauch ist bei Hybridfahrzeugen nämlich nur zum Teil auf einen besseren Wirkungsgrad der elektrischen Energieerzeugung zurückzuführen. Ein großer Beitrag zur Verbrauchssenkung wird durch intelligente Steuerstrategien beim Betreiben des Hybridantriebssystems erreicht. Die Steuerstrategien für die Hybridantriebssysteme sind so ausgelegt, dass ein Betrieb des Verbrennungsmotors in einem Bereich eines geringen Wirkungsgrads möglichst vermieden wird. Die Elektromaschine und der Verbrennungsmotor werden so miteinander kombiniert, dass die Wirkungsgradeigenschaften beider vorteilhaft genutzt werden. Weitere Energieersparnisse werden durch eine Start/Stopp-Funktion der Verbrennungsmaschine und die Möglichkeit einer Rückgewinnung von Energie bei Verzögerungsvorgängen erzielt.

Ein rein elektromotorischer Vortrieb ist beispielsweise in Bereichen mit nur geringen Lastanforderungen vorteilhaft, in denen ein Verbrennungsmotor typischerweise nur geringe Wirkungsgrade aufweist. Ein solcher Betrieb ist energetisch jedoch nur dann sinnvoll, wenn sich der Verbrennungsmotor und die Elektromaschine mechanisch voneinander entkoppeln lassen, so dass der Verbrennungsmotor nicht mitgeschleppt werden muss.

Darüber hinaus kann der Vortrieb auch durch den Verbrennungsmotor und die Elektromaschine gleichzeitig parallel erfolgen, um ein maximales Drehmoment des Hybridantriebssystems zu erhalten und die Fahrleistung des Fahrzeugs zu verbessern. Ein solcher Betrieb, bei dem zusätzlich zu dem Verbrennungsmotor die Elektromaschine zum elektromotorischen Vortrieb genutzt wird, wird als Boost-Betrieb bezeichnet.

Ein Einsatz der Elektromaschine zusätzlich zum Verbrennungsmotor zum Erzeugen von Vortriebsleistung bietet sich aus Wirkungsgradgründen prinzipiell in höheren Lastbereichen des Verbrennungsmotors an, da hier die durch die Substitution eines Teils des Antriebsmomentes erfolgende Lastpunktverschiebung in Richtung kleinerer Lasten nur vergleichsweise geringe Wirkungsgradeinbußen nach sich zieht.

Höhere Lastbereiche werden vorzugsweise ebenfalls genutzt, um mit Hilfe des Verbrennungsmotors bei einem relativ guten Wirkungsgrad die Elektromaschine generatorisch zu betreiben, um den elektrischen Energiespeicher mit elektrischer Energie zu laden. Diese elektrische Energie kann zu einem späteren Zeitpunkt aus dem elektrischen Energiespeicher abgerufen werden, um die Elektromaschine elektromotorisch zu betreiben. Idealerweise wird jedoch zumindest ein Teil der für den Vortrieb des Fahrzeugs benötigten Energie sowie die Energie für die Versorgung eines elektrischen Bordnetzes aus vorangegangenen Rekuperationsvorgängen gewonnen und im elektrischen Energiespeicher zwischengespeichert. Hierfür wird in Verzögerungsphasen des Fahrzeugs ein möglichst großer Anteil der Bremsleistung des Fahrzeugs dadurch erzeugt, dass die Elekromaschine generatorisch betrieben wird und Energie in den elektrischen Energiespeicher geladen wird.

Als Energiespeicher werden in Hybridfahrzeugen heute überwiegend zyklenfeste Batterien eingesetzt. Die weisen den Vorteil auf, eine sowohl volumenbezogene als auch massenbezogene hohe Energiedichte aufzuweisen. Batterien sind jedoch bezüglich einer erreichbaren Leistungsabgabe und Leistungsaufnahme begrenzt. Ferner ist die Lebensdauer einer Batterie über eine durchgesetzte Energie begrenzt, d.h. über die ein- und ausgespeicherte Energie. Daher ist eine starke Zyklisierung zu vermeiden, da sie zu einer verringerten Lebensdauer führt.

Alternativ werden daher bei Hybridfahrzeugen Hybridenergiespeicher verwendet. Hybridenergiespeicher umfassen eine Batterie und einen Kondensatorspeicher. Ein Kondensatorspeicher kann praktisch unbegrenzt zyklisch, d.h. gegenüber Batterien mit erheblich höheren Zyklenzahlen, belastet werden. Der Nachteil eines Kondensatorspeichers gegenüber einer Batterie ist, dass bei einem Kondensatorspeicher bezogen auf das Volumen nur eine sehr viel geringere Energiedichte erreichbar ist. Da in einem Fahrzeug das zur Verfügung stehende Volumen in der Regel begrenzt ist, können Kondensatorspeicher nur eine vergleichsweise geringe Energiemenge speichern bzw. zur Verfügung stellen. Daher ist in einem Hybridenergiespeicher ein paralleler Einsatz einer Batterie und eines Kondensatorspeichers vorgesehen. Der Kondensatorspeicher ist für die zyklische Ein- und Ausspeicherung von Energie vorgesehen. Die Batterie ist für die im Betrieb seltener vorkommenden lang andauernden elektrischen Belastungsphasen vorgesehen.

Die der Batterie entnommene elektrische Energie muss dieser in Rekuperationsphasen oder während eines Generatorbetriebs der Elektromaschine wieder zugeführt werden. Aus der Druckschrift DE 103 13 081 A1 ist ein Kraftfahrzeug mit einem von einem Verbrennungsmotor angetriebenen Generator beschrieben, welches zusätzlich zu einem herkömmlichen Bordnetz einen Energiespeicher in Form eines Kondensatorspeichers umfasst. Der Kondensatorspeicher ist über einen DC/DC-Wandler und einen parallel hierzu angeordneten Schalter mit dem Bordnetz verbunden. Parallel zu dem Kondensatorspeicher ist eine Batterie geschaltet, die über einen weiteren Schalter von dem Generator abgetrennt werden kann. Der Kondensatorspeicher in der bekannten Vorrichtung wird verwendet, um Rekuperationsenergie aufzunehmen und an das Bordnetz oder an den Generator abzugeben, der ebenfalls motorisch betrieben werden kann. Ein Nachladen der Batterie kann nur über den weiteren geschlossenen Schalter erfolgen, wenn die Spannung des Kondensatorspeichers ungefähr einer Nennspannung der Batterie entspricht. Eine alternative Ausführungsform ist offenbart, in der der Kondensatorspeicher über einen zusätzlichen Schalter von dem Generator getrennt werden kann, so dass ein Aufladen der Batterie und des Kondensatorspeichers unabhängig voneinander erfolgen kann.

Aus der Patentschrift DE 103 05 058 B3 ist ein Bordnetz bekannt, bei dem ein Kondensatorspeicher einer Batterie eines Bordnetzes mittels eines DC/DC-Wandlers parallel geschaltet ist. Sowohl die Batterie als auch der Kondensatorspeicher können bei dieser Ausführungsform jeweils über einen Schalter mit einer Leistungselektronik eines Starter-Generators verbunden werden. Diese Ausführungsform eines Energiespeichersystems weist den Nachteil auf, dass die Batteriespannung mit der Bordnetzspannung übereinstimmen muss. Diese Anordnung ist daher für eine Verwendung in einem Fahrzeug mit einem Hybridantriebssystem eher ungeeignet, da eine Batterie mit einer gebräuchlichen Bordnetzspannung von 12 V besonders bei einer niedrigen Batterietemperatur nur eine sehr geringe Leistungsabgabe ermöglicht.

In der EP 1 424 494 A1 wird ein Hybridantriebssystem sowie Verfahren zur gemeinsamen Aufbringung von Antriebsmoment offenbart, welches einen Verbrennungsmotor und eine elektrische Maschine umfasst, die mechanisch gekoppelt sind und bei hoher Leistungsanforderung gemeinsam Antriebsdrehmoment auf den Antrieb aufbringen. Das Antriebssystem ist mit einem Kurzzeitspeicher und einem Langzeitspeicher ausgerüstet, die über ein elektrisches Ventil miteinander gekoppelt sind. Der Langzeitspeicher und der Kurzzeitspeicher werden mit unterschiedlichen Ladespannungen geladen, wobei die Ladespannung des Langzeitspeichers niedriger als diejenige des Kurzzeitspeichers ist.

Die EP 1 247 979 A2 offenbart ein System mit Kondensatorspeichern zur Speicherung von elektrischer Energie, sowie ein Verfahren zum Betreiben eines solchen Energiesystems, bei welchem die Kondensatorspeicher bei möglichst hohen Spannungen betrieben werden können und gleichzeitig die gewünschte Lebensdauer erreichen durch eine temperaturabhängige Steuerung der Kondensatorspannung. In einer vorteilhaften Ausgestaltung wird die Arbeitsspannung außerdem von der momentanen Geschwindigkeit des Fahrzeugs abhängig gemacht, da die Wahrscheinlichkeit einer zu erwartenden Energieabgabe oder Energieaufnahme bei verschiedenen Fahrzeuggeschwindigkeiten unterschiedlich ist. Bei hoher Geschwindigkeit wird der Kondensatorspeicher zur Aufnahme von rekuperierter Bremsenergie auf einer niedrigen Arbeitsspannung gehalten. Bei niedriger Geschwindigkeit wird in Erwartung eines Anhaltens und späteren Neustarts die Arbeitsspannung des Kondensatorspeichers auf einen Wert nahe der bei der momentanen Temperatur maximal zulässigen Spannung eingestellt.

Die DE 43 44 053 A1 beschreibt ein Verfahren zum Betrieb eines Hybridfahrzeugs und Vorrichtung zum Durchführen des Verfahrens, dem die Aufgabe zugrunde liegt, den Gesamtverbrauch des Hybridfahrzeugs weiter zu optimieren. Hier wird eine Verbrauchsoptimierung offenbart, bei der jeweils Elektromotor als auch Verbrennungsmotor in einem verbrauchsmäßig zumindest vergleichsweise günstigen Leistungsbereich betrieben werden, bei der die Wirkungsgradkette der elektrischen Funktionskette, d. h. der Gesamtwirkungsgrad der elektrischen Energieerzeugung, -speicherung und Umwandlung in Antriebsenergie berücksichtigt wird.

Grundsätzlich besteht bei allen Energiespeichersystemen, die eine Batterie und einen Kondensatorspeicher umfassen, bei einer Verwendung mit einem Hybridantriebssystem folgende Schwierigkeit. Der Kondensatorspeicher ist in der Regel für eine höhere Spannung als die Batterie ausgelegt. Hierdurch kann beim Speichern eine höhere Energiedichte in dem Kondensatorspeicher erreicht werden. Ein zeitgleiches Aufladen des Kondensatorspeichers und der Batterie kann jedoch nur bei einer Spannung erfolgen, die unterhalb einer Ladeschlussspannung der Batterie liegt. Aufgrund eines gegenüber dem Kondensatorspeicher höheren Innenwiderstands der Batterie wird die Ladeschlussspannung der Batterie (bei gegebener Ladeleistung) jedoch relativ schnell überschritten. Dann müssen die Batterie und der Kondensatorspeicher elektrisch voneinander getrennt werden, um die zur Verfügung gestellte Energie vollständig speichern zu können. Bei länger andauernder Belastung des Hybridenergiespeichers, bei der auf die in der Batterie eingespeicherte Energie zurückgegriffen wird, ist es notwendig, die Batterie anschließend wieder aufzuladen. Trotzdem sollen Zugriffe auf die Batterie möglichst selten erfolgen, um die Lebensdauer der Batterie nicht herabzusetzen. Somit ist auch ein schnelles Aufladen des Kondensatorspeichers nach einer solchen Belastung wünschenswert, um für einen erneuten Boost-Betrieb genügend Energie zur Verfügung stellen zu können. Dies ist aber zeitgleich, wie oben beschrieben wurde, nur begrenzt möglich. Wird die Batterie nicht wieder voll aufgeladen, so setzt dies die Betriebssicherheit des Hybridfahrzeugs herab.

Für den Kondensatorspeicher gilt Folgendes: Zum einen ist es vorteilhaft, wenn der Kondensatorspeicher möglichst viel Energie gespeichert hat, um diese Energie für einen motorischen Antrieb der Elektromaschine zur Verfügung zu haben, um beispielsweise das Hybridantriebssystem im Boost-Betrieb zu betreiben. Andererseits ist es ebenso wünschenswert, dass der Kondensatorspeicher nicht voll aufgeladen ist, um die bei einem Verzögerungsvorgang frei werdende Rekuperationsenergie bei einem generatorischen Betrieb der Elektromaschine speichern zu können. Da der Kondensatorspeicher aus den oben erwähnten Gründen sowohl für die Energieabgabe als auch die Energieaufnahme des Hybridspeichersystems bevorzugt zu verwenden ist (bessere Leistungsab- und Aufnahme, Verbesserung der Lebensdauer der Batterie), ergibt sich hier ein Vorgabenkonflikt.

Das der Erfindung zugrunde liegende technische Problem ist die Schaffung eines Verfahrens und einer Vorrichtung zum verbesserten Betreiben eines Hybridenergiespeichers eingangs genannter Art, die zu einer Absenkung des Energieverbrauchs beitragen, eine Betriebssicherheit jederzeit sicherstellen und die Lebensdauer der Batterie des Hybridfahrzeugs verlängern.

Die Lösung des technischen Problems ergibt sich durch ein Verfahren mit den Merkmalen des Patentanspruchs 1 sowie eine Vorrichtung mit den Merkmalen des Patentanspruchs 9. Weitere vorteilhafte Ausgestaltungen der Erfindung ergeben sich aus den Unteransprüchen.

Hierzu ist vorgesehen, dass mindestens ein Betriebsparameter des Antriebssystems und dynamische Parameter des Hybridspeichers erfasst oder ermittelt werden und das Steuergerät in Abhängigkeit von dem mindestens einen Betriebsparameter und den dynamischen Parametern ein Absenken einer Spannung des Kondensatorspeichers etwa auf ein Spannungsniveau der Batterie und ein Schließen des Schalters bewirkt wird, so dass die Batterie über eine elektrische Verbindung über den geschlossenen Schalter aufgeladen wird. Hierdurch wird erreicht, dass ein optimales Aufladen der Batterie, falls dies notwendig ist, in Betriebszuständen erfolgt, in denen ein elektromotorischer Betrieb der Elektromaschine nicht möglich oder sehr unwahrscheinlich ist. Hierdurch wird die Betriebssicherheit des Hybridfahrzeugs verbessert. Zum einen wird die Batterie aufgeladen, zum andern ist sichergestellt, dass ein Nachladen nur dann erfolgt, wenn ein Boost-Einsatz nicht möglich oder erforderlich ist. Eine Einschränkung hinsichtlich des Boost-Betriebs wird also vermieden. Einem Fahrzeuglenker steht auch während des Aufladens der Batterie das optimale Antriebsmoment zur Verfügung. Die Notwendigkeit für ein Absenken der Kondensatorspannung und ein Aufladen der Batterie über den geschlossenen Schalter wird anhand der dynamischen Parameter des Hybridenergiespeichers ermittelt. Das Aufladen der Batterie kann so gesteuert werden, dass es nur bei solchen Betriebszuständen des Hybridantriebssystems und bei Ladungszuständen der Batterie erfolgt, in denen ein Aufladen effizient möglich ist. Dieses werden Betriebszustände des Verbrennungsmotors sein, bei denen der Verbrennungsmotor mit einem relativ hohen Wirkungsgrad arbeitet. Hierdurch werden Aufladungsphasen vermieden, in denen der Verbrennungsmotor bei einem schlechten Wirkungsgrad arbeitet. Hierdurch wird die verbrauchte Energie des Hybridfahrzeugs gesenkt.

Ein einen Betriebszustand des Hybridantriebssystems kennzeichnender Betriebsparameter ist eine Verbrennungsmotordrehzahl oder eine Elektromaschinendrehzahl. Sind die Elektromaschine und der Verbrennungsmotor starr gekoppelt, so stimmen die Elektromaschinendrehzahl und die Verbrennungsmotordrehzahl überein. Es ist jedoch auch möglich, ein Hybridantriebssystem so zu gestalten, dass die Elektromaschine und der Verbrennungsmotor über ein Ge triebe und/oder eine Kupplung miteinander verbunden sind. In diesem Fall können die Elektromaschinendrehzahl und die Verbrennungsmotordrehzahl voneinander abweichen. Aus der Verbrennungsmotordrehzahl oder der Elektromaschinendrehzahl lässt sich jedoch auf den Betriebszustand zurückschließen, in dem das Antriebssystem arbeitet. Da ein Aufladen der Batterie über den geschlossenen Schalter sinnvollerweise nur dann erfolgt, wenn das Hybridantriebssystem keine elektrische Energie für einen Boost-Betrieb anfordern wird, sieht eine vorteilhafte Ausgestaltung der Erfindung vor, dass der mindestens eine Betriebsparameter eine Verbrennungsmotordrehzahl oder eine Elektromaschinendrehzahl ist und die Verbrennungsmotor- oder Elektromaschinendrehzahl mit einem Drehzahlschwellenwert verglichen werden und das Absenken der Spannung und Schließen des Schalters nur erfolgen, wenn die Verbrennungsmotor- oder Elektromaschinendrehzahl größer als der Drehzahlschwellenwert sind. Da ein Boost-Betrieb nur bei niedrigen Verbrennungsmotordrehzahlen bzw. Elektromaschinendrehzahlen aufgrund der Drehmomentcharakteristika des Verbrennungsmotors und der Elektromaschine sinnvoll ist, werden Aufladungsphasen der Batterie bei einer geringen Drehzahl des Verbrennungsmotors vermieden, in denen ein Boost-Betrieb des Hybridantriebssystems möglich wäre, jedoch die Energie des Kondensatorspeichers in der Regel nicht ausreicht, um auch nur einen kürzeren Boost-Betrieb zu gewährleisten. Durch diese Weiterbildung der Erfindung wird somit ein unerwünschtes Entnehmen von Energie aus der Batterie vermieden, was zum Aufrechterhalten des Boost-Betriebs notwendig wäre.

Ein Boost-Betrieb des Hybridantriebssystems ist in der Regel nur in einem begrenzten Verbrennungsmotordrehzahlbereich bzw. Elektromaschinendrehzahlbereich sinnvoll. Dieser Bereich umfasst einen Verbrennungsmotordrehzahlbereich, in dem der Verbrennungsmotor nur ein geringes Drehmoment erzeugt. In diesem Bereich niederer Drehzahlen ist die Antriebsmomenterzeugung einer motorisch betriebenen Elektrömaschine besonders groß. Oberhalb einer bestimmen Verbrennungsmotorendrehzahl bzw. Elektromaschinendrehzahl ist ein Boost-Betrieb nicht mehr sinnvoll, da zum einen der Verbrennungsmotor ein hohes Drehmoment erzeugt und das von der Elektromaschine erzeugte Drehmoment stark abnimmt. Als Boost-Bereich wird daher nur der Bereich bezeichnet, in dem eine unterstützende Verwendung der Elektromaschine vorgesehen ist. Solange das Hybridantriebssystem in diesem Boost-Bereich betrieben wird, muss damit gerechnet werden, dass ein Fahrzeuglenker das Fahrzeug im Boost-Betrieb betreiben will. Daher ist eine Absenkung der Spannung des Kondensatorspeichers in diesem Bereich nicht angezeigt, da ansonsten im Kondensatorspeicher nicht genügend Energie gespeichert ist, die mit einer hohen Leistungsabgabe der Elektromaschine zur Verfügung werden kann. Um sicher zu stellen, dass eine Rückkehr in den Boost-Bereich nicht unmittelbar zu erwarten ist, sieht die Erfindung vor, dass der Drehzahlschwellenwert eine vorgegebene Umdrehungszahl größer als eine maximale Verbrennungsmotor- oder Elektromaschinendrehzahl für einen elektrischen Boost-Betrieb ist. Die vorgegebene Umdrehungszahl beträgt vorteilhafterweise 250 U/min, vorteilhafter 500 U/min und am bevorzugtesten 750 U/min.

Ein Aufladen der Batterie ist nur dann sinnvoll, wenn anhand eines Ladungszustands der Batterie festgestellt wird, dass dieser unterhalb eines Ladungszustandsschwellenwertes liegt. Der Ladungszustandsschwellenwert kann 90 %, bevorzugt 80 % oder 70 % oder sogar 60 % eines maximalen Ladungszustands betragen. Oberhalb des Schwellenwerts soll ein Aufladen der Batterie unterbleiben, da die Batterie genügend Energie gespeichert hat, um einen sicheren Fahrbetrieb mit dem Hybridenergiespeicher zu gewährleisten. Ein Absenken der Spannung des Kondensatorspeichers ist nur dann notwendig, wenn sie größer als ein Nennspannungsniveau der Batterie ist. Eine Weiterbildung der Erfindung sieht daher vor, dass die dynamischen Parameter einen Ladungszustand der Batterie und die Spannung des Kondensatorspeichers umfassen, wobei die Spannung des Kondensatorspeichers mit dem Nennspannungsniveau der Batterie verglichen wird und das Absenken der Spannung nur bewirkt wird, wenn die Spannung des Kondensatorspeichers oberhalb des Nennspannungsniveaus der Batterie liegt, und der Ladungszustand der Batterie mit einem Ladungszustandsschwellenwert verglichen wird und das Schließen des Schalters nur bewirkt wird, wenn der Ladungszustand der Batterie unterhalb des Ladungszustandsschwellenwerts liegt.

Die maximale Verbrennungsmotor- oder Elektromaschinendrehzahl für den elektrischen Boost-Betrieb entsprechen vorteilhafterweise einem festgelegten prozentualen Anteil einer Nenndrehzahl des Verbrennungsmotors. Die maximale Verbrennungsmotor- oder Elektromaschinendrehzahl ist vorzugsweise kleiner als 30%, als 50% oder als 60% einer Nenndrehzahl des Verbrennungsmotors.

Die Fähigkeit einer Batterie, elektrische Energie abzugeben bzw. aufzunehmen, ist u.a. auch von ihrer Batterietemperatur und/oder einem Batteriezustand, der Angaben über die Batteriealterung umfasst (SOH = State of Health) abhängig. Daher werden bei einer bevorzugten Ausführungsform eine Batterietemperatur und/oder ein Batteriezustand erfasst und der Ladungszustandsschwellenwert, basierend auf der Batterietemperatur und dem Batteriezustand, bestimmt.

Solange das Hybridantriebssystem sich in einem Betriebszustand befindet, in dem es mit einem relativ hohen Wirkungsgrad arbeitet und ein Eintreten in den Boost-Bereich nicht unmittelbar zu erwarten ist, wird das Aufladen der Batterie fortgesetzt. Ändert sich jedoch der Betriebszustand des Hybridantriebssystems, so dass ein Eintreten in den Boost-Bereich zu erwarten ist, so ist es sinnvoll, das Aufladen der Batterie zu beenden und den Kondensatorspeicher erneut während des Abfalls der Verbrennungsmotordrehzahl bzw. Elektromaschinendrehzahl aufzuladen. Das Aufladen des Speichers kann auch mittels Rekuperationsenergie aus einem Bremsvorgang erfolgen. Ein Öffnen des Schalters ist daher sinnvoll, wenn ein weiterer Drehzahlschwellenwert unterschritten wird. Der weitere Drehzahlschwellenwert ist sinnvollerweise von dem ersten Drehzahlschwellenwert verschieden, um ein ständiges Öffnen und Schließen des Schalters und entsprechendes Aufladen und Entladen des Kondensators zu vermeiden, wenn das Hybridantriebssystem bei einer Verbrennungsmotordrehzahl bzw. Elektromaschinendrehzahl betrieben wird, die dem Drehzahlschwellenwert ungefähr entspricht. Eine vorteilhafte Weiterbildung der Erfindung sieht daher vor, dass der Schalter geöffnet wird, wenn die Verbrennungsmotor- oder Elektromaschinendrehzahl den weiteren Drehzahlschwellenwert unterschreiten, und der Kondensatorspeicher auf einen Energiesollwert aufgeladen wird. Der Sollenergiewert ist so festgelegt, dass in dem Kondensatorspeicher eine ausreichende Energie für einen durchschnittlichen Boost-Einsatz gespeichert ist, wenn der Kondensatorspeicher auf den Sollenergiewert aufgeladen ist.

Andererseits sehen vorteilhafte Ausgestaltungen der Erfindung vor, dass das Aufladen der Batterie, während die Verbrennungsmotor- oder Elektromaschinendrehzahl größer als die weitere Drehzahlschwelle sind, erfolgt, bis der Ladungszustand einen oberen Ladungszustandsschwellenwert oder eine Ladungszustandsänderung einen Ladungszustandsänderungsschwellenwert erreicht hat.

Bei einer besonders bevorzugten Weiterbildung der Erfindung kann die Batterie auch dann aufgeladen werden, wenn das Hybridantriebssystem in dem Boost-Bereich betrieben wird und ein Aufladen aufgrund des Ladungszustandes der Batterie und des Kondensatorspeichers, der Spannung des Kondensatorspeichers usw., sinnvoll ist. Dazu ist vorgesehen, dass zwischen dem Kondensatorspeicher und der Batterie Energie über einen die Batterie und den Kondensatorspeicher verbindenden DC/DC-Wandler in Abhängigkeit von dem mindestens einen Betriebsparameter und/oder den dynamischen Parametern des Hybridenergiespeichers ausgetauscht wird. Bei dieser Weiterbildung der Erfindung kann der Kondensatorspeicher auch mit Hilfe der Batterie mit einer Energie auf einen Sollwert aufgeladen werden, so dass ein Kaltstart des Hybridantriebssystems möglich ist. Dieses Übertragen von Energie würde in einem solchen Fall beispielsweise erfolgen, wenn der Kondensatorspeicher vor einem Motorenstart nicht genügend Energie aufweist, um genügend Energie für ein Starten des Hybridantriebssystems zur Verfügung zu stellen.

Die Merkmale der Weiterbildungen der erfindungsgemäßen Vorrichtung weisen dieselben Vorteile wie die entsprechenden Merkmale des erfindungsgemäßen Verfahrens auf.

Die Erfindung wird im Folgenden anhand eines bevorzugten Ausführungsbeispiels unter Bezugnahme auf eine Zeichnung näher erläutert. Hierbei zeigen:
- Fig. 1: einen schematischen Aufbau eines Hybridantriebssystems; und
- Fig. 2: einen Graphen, in dem jeweils das Drehmoment eines Verbrennungsmotors und einer Elektromaschine gegen die Drehzahl aufgetragen sind.

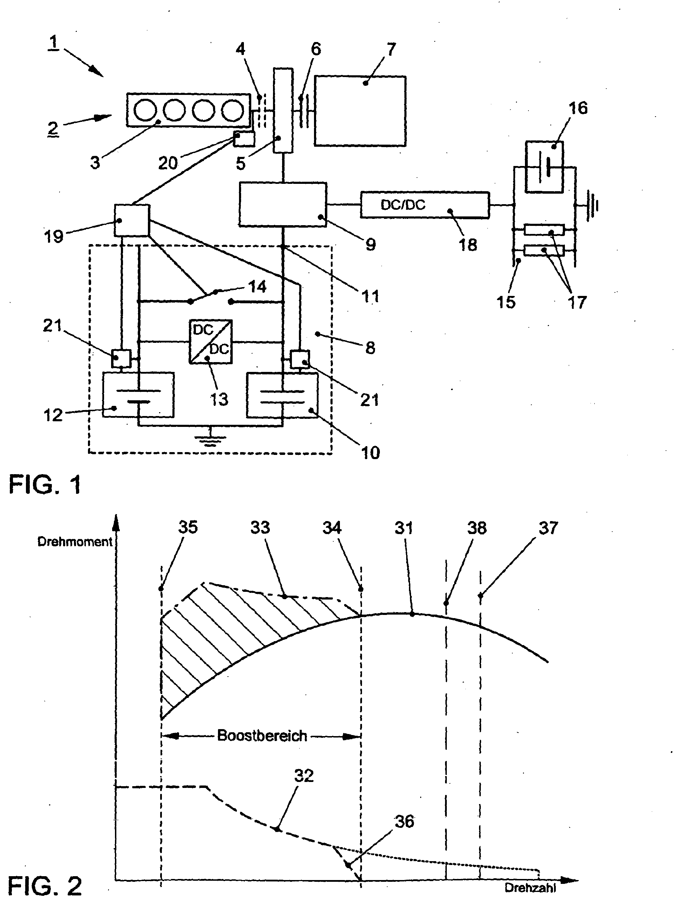

In Fig. 1 ist eine schematische Ansicht eines Fahrzeugs 1 mit einem Hybridantriebssystem 2 dargestellt. Das Hybridantriebssystem 2 umfasst einen Verbrennungsmotor 3, der über eine optionale Kupplung 4 mit einer Elektromaschine 5 verbunden ist. Anstelle der optionalen Kupplung 4 kann auch ein Riemenantrieb oder ein Getriebe vorgesehen sein. Die Elektromaschine 5 ist über eine Fahrzeugkupplung 6 und ein Fahrzeuggetriebe 7 mit angetriebenen Rädern (nicht dargestellt) des Fahrzeugs 1 verbunden. Ein Hybridenergiespeicher 8 ist über eine Leistungselektronik 9 mit der Elektromaschine 5 verbunden. Der Hybridenergiespeicher 8 umfasst einen Kondensatorspeicher 10, der direkt mit einem Anschluss 11 des Hybridenergiespeichers 8 verbunden ist. Der Hybridenergiespeicher 8 umfasst femer eine Batterie 12, die über einen DC/DC-Wandler 13 und einen Schalter 14 mit dem Kondensatorspeicher 10 parallel geschaltet ist. Ist der Schalter 14 in einer geschlossenen Stellung, so existiert eine direkte elektrische Verbindung zwischen dem Anschluss 11 des Hybridenergiespeichers 8 und der Batterie 12. In einer geöffneten Stellung des Schalters 14 kann Energie zwischen dem Kondensatorspeicher 10 und der Batterie 12 nur über den DC/DC-Wandler 13 ausgetauscht werden.

Zusätzlich zu dem Hybridenergiespeicher 8 verfügt das Fahrzeug 1 über ein Bordnetz 15, das einen elektrischen Energiespeicher aufweist, der als Pufferbatterie 16 ausgebildet ist. Die Pufferbatterie 16 des Bordnetzes 15 ist in der Regel eine 12V-Batterie, die Verbraucher 17 mit Energie versorgt, sofern das Bordnetz 15 nicht über einen weiteren DC/DC-Wandler 18 mit Energie versorgt wird. Der weitere DC/DC-Wandler 18 ist mit der Leistungselektronik 9 verbunden. Wird die Elektromaschine 5 generatorisch betrieben, so kann eine Versorgung des Bordnetzes 5 über den weiteren DC/DC-Wandler 18 erfolgen. Andernfalls kann die elektrische Energie aus dem Hybridenergiespeicher 8 über den weiteren DC/DC-Wandler 18 in das Bordnetz 15 geliefert werden.

Im Betrieb wird der Kondensatorspeicher 10 vorzugsweise zum Einspeichern bzw. Aüsspeichem von elektrischer Energie aus dem Hybridenergiespeicher 8 verwendet. Vor einem Starten des Hybridantriebssystems 2 ist in dem Kondensatorspeicher 10 vorzugsweise eine Energiemenge gespeichert, die ausreicht, um die Elektromaschine 5 motorisch zu betreiben und hierdurch den Verbrennungsmotor 3 zu starten. Ist die in dem Kondensatorspeicher 10 gespeicherte Energiemenge hierfür nicht ausreichend, so kann vor dem Starten über den DC/DC-Wandler 13 Energie aus der Batterie 12 in den Kondensatorspeicher 10 übertragen werden. Alternativ kann beim Starten der Schalter 14 geschlossen werden, wenn eine Spannung des Kondensatorspeichers 10 auf eine Nennbatteriespannung der Batterie 12 abgefallen ist. In diesem Fall wird ein Teil der zum Starten des Verbrennungsmotors 3 benötigten Energie aus der Batterie 12 entnommen.

Wird die die Elektromaschine 5 generatorisch betrieben, beispielsweise bei einem Bremsvorgang, wird über die Leistungselektronik elektrische Energie in den Hybridenergiespeicher 8 eingespeist. Um die Batterie 12 zu schonen, wird der Kondensatorspeicher 10 in der Regel bei einer Spannung oberhalb eines Nennspannungsniveaus der Batterie 12 betrieben. Der Schalter 14 befindet sich dann in seiner offenen Stellung, so dass ein Einspeichern der elektrischen Energie in den Kondensatorspeicher 10 erfolgt. Ist die Batterie 12 nicht voll aufgeladen, so kann Energie aus dem Speicherkondensator 10 über den DC/DC-Wandler 13 in die Batterie 12 übertragen werden.

Bei niedrigen Verbrennungsmotordrehzahlen kann die Elektromaschine zusätzlich als Vortriebsmittel benutzt werden. Hierzu wird die Elektromaschine 5 motorisch betrieben. Der gleichzeitige motorische Betrieb des Verbrennungsmotors 3 und der Elektromaschine 5 wird als Boost-Betrieb bezeichnet. Die hierbei freigesetzten hohen Drehmomente des Hybridantriebssystems 2 werden in der Regel nur für kurze Beschleunigungsphasen benötigt, so dass in der Regel die in dem Kondensatorspeicher 10 gespeicherte Energie ausreicht. Lediglich bei länger anhaltenden starken Beschleunigungsphasen oder länger anhaltenden Bergfahrten reicht die in dem Kondensatorspeicher 10 gespeicherte Energie nicht aus, so dass, sobald die Spannung an dem Kondensatorspeicher auf das Nennspannungsniveau der Batterie 12 abgefallen ist, der Schalter 14 geschlossen wird. Nun wird zusätzlich elektrische Energie der Batterie 12 verwendet, um den Boost-Betrieb des Hybridantriebssystems 2 aufrechtzuerhalten. Die hierbei entnommene Energie senkt einen Ladungszustand der Batterie (SOC - state of charge). Wird der Verbrennungsmotor anschließend bei höheren Verbrennungsmotordrehzahlen betrieben, ist ein zusätzlicher motorischer Antrieb der Elektromaschine 5 aufgrund der Drehmomentcharakteristik von Elektromaschinen nicht sinnvoll. In diesem höheren Verbrennungsmotordrehzahlbereich ist es daher nicht erforderlich, in dem Kondensatorspeicher 10 Energie für einen elektromotorischen Vortrieb zu speichern. Vielmehr ist es sinnvoll, den Kondensatorspeicher 10 soweit zu entladen, dass er Speicherkapazität für die Einspeicherung von Rekuperationsenergie aus Bremsvorgängen aufweist.

Ein Steuergerät 19 erfasst eine Verbrennungsmotordrehzahl und/oder Elektromaschinendrehzahl, die mittels Drehzahlsensoren 20 ermittelt werden. Über Zustandssensoren 21 werden Parameter des Hybridenergiespeichers 8 ermittelt. Diese Parameter können u.a. die Spannung des Kondensatorspeichers, einen Ladungszustand der Batterie 12, einen Alterungszustand der Batterie 12, eine Batteriespannung, eine Batterietemperatur usw. umfassen. Anhand der Verbrennungsmotordrehzahl und/oder der Elektromaschinendrehzahl und den Parametern des Hybridenergiespeichers 8 ermittelt das Steuergerät 19, ob die Batterie 12 aufgeladen werden muss. Ist dies der Fall, so wird, sofern die Verbrennungsmotordrehzahl oder Elektromaschinendrehzahl größer als ein Drehzahlschwellenwert ist, die Spannung des Kondensatorspeichers 10 abgesenkt. Die Absenkung findet selbstverständlich nur statt, wenn die Spannung des Kondensatorspeichers 10 größer als das aktuelle Ladeschlussspannungsniveau der Batterie 12 ist. Eine Absenkung der Spannung des Kondensatorspeichers 10 kann beispielsweise erfolgen, indem Energie über den weiteren DC/DC-Wandler 18 in das Bordnetz 15 eingespeist wird oder die Elektromaschine 5 kurzzeitig motorisch betrieben wird. Dieser Betrieb kann auch außerhalb des Boost-Bereichs erfolgen und führt zu einer kaum merklichen Drehmomentsteigerung. Eine Motorsteuerung kann vorsehen, dass der Verbrennungsmotor 3 so gesteuert wird, dass für den Fahrer keine wahrnehmbare Drehmomentsteigerung des Hybridantriebssystems 2 resultiert.

Ist die Spannung an dem Kondensatorspeicher 10 auf das Nennspannungsniveau der Batterie 12 abgefallen, wird der Schalter 14 geschlossen und über die generatorisch betriebene Elektromaschine 5 elektrische Energie in die Batterie 12 eingespeichert. Die Einspeicherung erfolgt hierbei so, dass ein Ladestrom soweit begrenzt wird, dass an der Batterie 12 keine Spannung auftritt, die größer als eine Ladeschlussspannung der Batterie ist. Diese Begrenzung kann beispielsweise dadurch erreicht werden, dass das sich einstellende Generatormoment der Elektromaschine 5 einen applizierbaren Grenzwert nicht übersteigt. Andere Möglichkeiten einer Strombegrenzung sind dem Fachmann bekannt. Eine direkte Aufladung der Batterie 12 über den geschlossenen Schalter 14 ist insbesondere dann sinnvoll, wenn der Ladungszustand der Batterie 12 weniger als 90 %, bevorzugt weniger als 80 % und weiter bevorzugt weniger als 70 % und noch bevorzugter weniger als 60 % eines maximalen Ladungszustands aufweist. Bei einem geringen Ladungszustand der Batterie 12 können relativ große Ladungsströme verkraftet werden, ohne dass es zu einem Anstieg der Spannung an der Batterie 12 über die Ladeschlussspannung der Batterie 12 kommt Solange die Verbrennunqsmotordrehzahl oder Elektromaschinendrehzahl oberhalb des Drehzahlschwellenwertes liegen, wird das Aufladen der Batterie 12 fortgesetzt, bis ein Ladungszustandsschwellenwert erreicht ist. Der Ladungszustandsschwellenwert kann einem Ladungszustand von 70 %, 80 %, 90 % oder auch 95 % entsprechen. Der Ladungszustandsschwellenwert, der erreicht werden soll, ist von der Batterietemperatur und einem Alterungszustand (SOH = State of Health) abhängig. Alternativ kann vorgesehen sein, dass das Aufladen der Batterie 12 fortgesetzt wird, bis eine Ladungszustandsänderung einen Ladungszustandsänderungsschwellenwert erreicht hat, der mindestens 5 % des maximalen Ladungszustands, mindestens 10 % des maximalen Ladungszustands oder mindestens 20 % des maximalen Ladungszustands beträgt.

Sinkt die Verbrennungsmotordrehzahl und/oder die Elektromaschinendrehzahl unter einen weiteren Drehzahlschwellenwert, so wird der Aufladevorgang über den geschlossenen Schalter 14 beendet und der Schalter 14 geöffnet. Anschließend wird der Kondensatorspeicher 10 auf einen Energiesollwert aufgeladen. Das Aufladen des Kondensatorspeichers 10 erfolgt durch generatorischen Betrieb der Elektromaschine vorzugsweise bei Rekuperation bei einem Bremsvorgang. Auf diese Weise wird sichergestellt, dass in dem Kondensatorspeicher eine ausreichende Energiemenge gespeichert ist, um normale Boost-Vorgänge im Boost-Betrieb durchführen zu können, ohne auf die Batterie 12 zurückgreifen zu müssen.

Alternativ zu dem Aufladen der Batterie 12 direkt über den Schalter 14 kann das Aufladen der Batterie 12 über den DC/DC-Wandler 13 erfolgen, wenn das Antriebssystem über eine längere Zeit im Boost-Bereich betrieben wird, so dass die Spannung des Kondensatorspeichers 10 nicht auf die Batteriespannung abgesenkt werden kann. Hierbei ist jedoch zu beachten, dass es bei der DC/DC-Wandlung zu Wandlungsverlusten kommt und ein DC/DC-Wandler 13 aus Kostengründen hinsichtlich seiner Leistung in der Regel begrenzt ausgeführt wird.

In Fig. 2 ist eine beispielhafte Drehmomentkennlinie 31 des Verbrennungsmotors 3 (vgl. Fig. 1) und eine weitere Drehmomentkennlinie 32 der Elektromaschine 5 gegen die Drehzahl aufgetragen. Zusätzlich ist eine Drehmomentkennlinie eines Boost-Betriebs 33 dargestellt, die das Drehmoment bei einem gleichzeitigen motorischen Betrieb der Elektromaschine 5 mit dem Verbrennungsmotor 3 angibt. Aus der weiteren Drehmomentkennlinie 32 der Elektromaschine 5 erkennt man, dass bei höheren Drehzahlen das von der Elektromaschine 5 zur Verfügung gestellte Drehmoment stark abnimmt. Daher ist ein Boost-Betrieb des Hybridantriebssystems 2 nur bis zu einer maximalen Verbrennungsmotor- oder Elektromaschinendrehzahl vorgesehen, die durch eine gestrichelte Linie 34 angezeigt wird. Der Bereich von einer minimalen Verbrennungsmotordrehzahl, die durch eine gestrichelte Linie 35 angedeutet ist, bis zu der maximalen Verbrennungs- oder Elektromaschinendrehzahl wird als Boost-Bereich bezeichnet. Um keinen abrupten Drehmomentabfall beim Überschreiten der maximalen Verbrennungsmotor- oder Elektromaschinendrehzahl (Linie 34) zu erhalten, wird das Drehmoment der Etektromaschine 5 in einem Bereich 36 unterhalb der maximalen Elektromaschinendrehzahl (Linie 34) abgesteuert. Solange das Hybridantriebssystem 2 im Boost-Bereich betrieben wird, ist es sinnvoll, in dem Kondensatorspeicher 10 eine Sollenergie zu speichern, so dass zumindest ein kurzzeitiger Boost-Betrieb möglich ist, ohne auf die Batterie 12 zurückgreifen zu müssen. Erst wenn ein Drehzahlschwellenwert, der durch eine Linie 37 angedeutet ist, überschritten wird, wird, sofern ein Aufladen der Batterie 12 erforderlich ist, die Kondensatorspannung abgesenkt und der Schalter 14 geschlossen, um die Batterie 12 direkt bei generatorischem Betrieb der Elektromaschine 5 aufladen zu können. Fällt die Drehzahl auf einen weiteren Drehzahlschwellenwert ab, der durch die Linie 38 angedeutet ist, oder tritt ein Verzögerungsvorgang ein, so wird der Schalter 14 geöffnet und ein Aufladen der Batterie 12 beendet. Der Drehzahlschwellenwert (Linie 37) und der weitere Drehzahlschwellenwert (Linie 38) können zusammenfallen. Es ist jedoch sinnvoll, dass der weitere Drehzahlschwellenwert (Linie 38) etwas geringer als der Drehzahlschwellenwert (Linie 37) ist, da so ein ständiges Absenken der Spannung und Schließen des Schalters 14 bzw. Öffnen des Schalters 14 und Aufladen des Kondensatorspeichers 10 unterbleibt, wenn das Hybridantriebssystem 2 über einen gewissen Zeitraum bei einer Verbrennungsmotordrehzahl bzw. Elektromaschinendrehzahl im Bereich des Drehzahlschwellenwerts (Linie 37) betrieben wird. Der Drehzahlschwellenwert (Linie 37) liegt vorzugsweise 250 Umdrehungen pro Minute, bevorzugter 500 Umdrehungen pro Minute und am bevorzugtesten 750 Umdrehungen pro Minute oberhalb der maximalen Verbrennungsmotor- oder Elektromaschinendrehzahl für den elektrischen Boost-Betrieb (Linie 34). So ist es möglich, dass der Kondensatorspeicher vor dem erneuten Eintritt in den Boost-Bereich seinen Energiesollwert erreicht. Die maximale Verbrennungsmotordrehzahl oder Elektromaschinendrehzahl für den elektrischen Boost-Betrieb liegt in der Regel bei weniger als 30 %, weniger als 50 % oder weniger als 60 % einer Nenndrehzahl des Verbrennungsmotors 3.

## Patentansprüche

1. Verfahren zum Betreiben eines Hybridenergiespeichers (8), der eine Batterie (12) und einen Kondensatorspeicher (10) umfasst, die über einen Schalter (14) parallel verbunden sind, mittels dessen die Batterie (12) von einem Anschluss des Hybridenergiespeichers (8) abtrennbar ist, in einem Fahrzeug (1) mit einem Hybridantriebssystem (2), das einen Verbrennungsmotor (3) und eine Elektromaschine (5) umfasst, mittels eines Steuergeräts (19), wobei mindestens ein Betriebsparameter des Hybridantriebssystems (2) und dynamische Parameter des Hybridenergiespeichers (8) erfasst oder ermittelt werden und das Steuergerät (19) in Abhängigkeit von dem mindestens einen Betriebsparameter und den dynamischen Parametern ein Absenken einer Spannung des Kondensatorspeichers (10) etwa auf ein Ladeschlussspannungsniveau der Batterie (12) und ein Schließen des Schalters (14) in Betriebszuständen bewirkt, in denen ein elektromotorischer Betrieb der Elektromaschine (5) nicht möglich oder sehr unwahrscheinlich ist, so dass die Batterie (12) über die elektrische Verbindung über den geschlossenen Schalter (14) aufgeladen wird, wobei der mindestens eine Betriebsparameter eine Verbrennungsmotordrehzahl oder eine Elektromaschinendrehzahl ist und die Verbrennungsmotor- oder Elektromaschinendrehzahl mit einem Drehzahlschwellenwert verglichen werden und das Absenken der Spannung und Schließen des Schalters (14) nur erfolgen, wenn die Verbrennungsmotor- oder Elektromaschinendrehzahl größer als der Drehzahlschwellenwert sind, wobei der Drehzahlschwellenwert eine vorgegebene Umdrehungszahl größer als eine maximale Verbrennungsmotor- oder Elektromaschinendrehzahl für einen elektrischen Boost-Betrieb ist.

2. Verfahren nach Anspruch 1, **dadurch gekennzeichnet, dass** die dynamischen Parameter einen Ladungszustand der Batterie (12) und die Spannung des Kondensatorspeichers (10) umfassen, wobei die Spannung des Kondensatorspeichers (10) mit dem Nennspannungsniveau der Batterie (12) verglichen wird und das Absenken der Spannung nur bewirkt wird, wenn die Spannung des Kondensatorspeichers (10) oberhalb des Ladeschlussspannungsniveaus der Batterie (12) liegt, und der Ladungszustand der Batterie (12) mit einem Ladungszustandsschwellenwert verglichen wird und das Schließen des Schalters (14) nur bewirkt wird, wenn der Ladungszustand der Batterie (12) unterhalb des Ladungszustandsschwellenwerts liegt.

3. Verfahren nach einem der Ansprüche 1 oder 2, **dadurch gekennzeichnet, dass** die maximale Verbrennungsmotor- oder Elektromaschinendrehzahl für den elektrischen Boost-Betrieb einem festgelegten prozentualen Anteil einer Nenndrehzahl des Verbrennungsmotors (3) entsprechen.

4. Verfahren nach einem der Ansprüche 2 oder 3, **dadurch gekennzeichnet, dass** eine Batterietemperatur und/oder ein Batteriezustand erfasst werden und der Ladungszustandsschwellenwert basierend auf der Batterietemperatur und dem Batteriezustand bestimmt wird.

5. Verfahren nach einem der Ansprüche 1 bis 4, **dadurch gekennzeichnet, dass** der Schalter (14) geöffnet wird, wenn die Verbrennungsmotor- oder Elektromaschinendrehzahl den weiteren Drehzahlschwellenwert unterschreiten, und der Kondensatorspeicher (10) auf einen Energiesollwert aufgeladen wird.

6. Verfahren nach einem der Ansprüche 1 bis 5, **dadurch gekennzeichnet, dass** das Aufladen der Batterie (12), während die Verbrennungsmotor- oder Elektromaschinendrehzahl größer als ein weiterer Drehzahlschwellenwert sind, fortgesetzt wird, bis der Ladungszustand einen oberen Ladungszustandsschwellenwert oder eine Ladungszustandsänderung einen Ladungszustandsänderungsschwellenwert erreicht hat.

7. Verfahren nach einem der vorangegangenen Ansprüche, **dadurch gekennzeichnet, dass** zwischen dem Kondensatorspeicher (10) und der Batterie (12) Energie über einen die Batterie (12) und den Kondensatorspeicher (10) verbindenden DC/DC-Wandler (13) in Abhängigkeit von dem mindestens einen Betriebsparameter und/oder den dynamischen Parametern des Hybridenergiespeichers (8) ausgetauscht wird.

8. Verfahren nach einem der vorangehenden Ansprüche, **dadurch gekennzeichnet, dass** ein Ladestrom der Batterie (12) begrenzt wird, so dass eine maximale Ladeschlussspannung an der Batterie (12) nicht überschritten wird.

9. Vorrichtung zum Betreiben eines Hybridenergiespeichers (8), der eine Batterie (12) und einen Kondensatorspeicher (10) umfasst, die über einen Schalter (14) parallel verbunden sind, mittels dessen die Batterie (12) von einem Anschluss (11) des Hybridenergiespeichers (8) abtrennbar ist, in einem Fahrzeug (1) mit einem Hybridantriebssystem (2), das einen Verbrennungsmotor (3) und eine Elektromaschine (5) umfasst, umfassend ein Steuergerät (19), wobei mindestens ein Betriebsparameter des Hybridantriebssystems (2) und dynamische Parameter des Hybridenergiespeichers (8) erfassbar oder ermittelbar sind und dass mittels des Steuergeräts (19) in Abhängigkeit von dem mindestens einen Betriebsparameter und den dynamischen Parametern ein Absenken einer Spannung des Kondensatorspeichers (10) auf ein Spannungsniveau der Batterie (12) und ein Schließen des Schalters (14) in Betriebszuständen bewirkbar ist, in denen ein elektromotorischer Betrieb der Elektromaschine (5) nicht möglich oder sehr unwahrscheinlich ist, so dass die Batterie (12) über die elektrische Verbindung über den geschlossenen Schalter (14) aufladbar ist, wobei der mindestens eine Betriebsparameter eine Verbrennungsmotordrehzahl oder eine Elektromaschinendrehzahl ist und die Verbrennungsmotor- oder Elektromaschinendrehzahl mittels Vergleichsmitteln mit einem Drehzahlschwellenwert vergleichbar sind und das Absenken der Spannung und Schließen des Schalters (14) nur bewirkbar sind, wenn die Verbrennungsmotor- oder Elektromaschinendrehzahl größer als der Drehzahlschwellenwert sind, wobei der Drehzahlschwellenwert eine vorgegebene Umdrehungszahl größer als eine maximale Verbrennungsmotor- oder Elektromaschinendrehzahl für einen elektrischen Boost-Betrieb ist.

10. Vorrichtung nach Anspruch 9, **dadurch gekennzeichnet, dass** die dynamischen Parameter einen Ladungszustand der Batterie (12) und die Spannung des Kondensatorspeichers (10) umfassen, wobei die Spannung des Kondensatorspeichers (10) mittels anderer Vergleichsmittel mit dem Spannungsniveau der Batterie vergleichbar ist und das Absenken der Spannung nur bewirkbar ist, wenn die Spannung des Kondensatorspeichers (10) oberhalb des Spannungsniveaus der Batterie (12) liegt, und der Ladungszustand mittels weiterer Vergleichsmittel mit einem Ladungszustandsschwellenwert vergleichbar ist und das Schließen des Schalters (14) nur bewirkbar ist, wenn der Ladungszustand unterhalb des Ladungszustandsschwellenwerts liegt.

11. Vorrichtung nach einem der Ansprüche 9 oder 10, **dadurch gekennzeichnet, dass** die maximale Verbrennungsmotor- oder Elektromaschinendrehzahl für den elektrischen Boost-Betrieb einem festgelegten prozentualen Anteil einer Nenndrehzahl des Verbrennungsmotors (3) entsprechen.

12. Vorrichtung nach einem der Ansprüche 10 oder 11, **dadurch gekennzeichnet, dass** mittels eines Temperatursensors eine Batterietemperatur und/oder mittels Mitteln zum Ermitteln eines Batteriezustands ein Batteriezustand ermittelbar sind und mittels Mitteln zur Schwellenwertfestsetzung der Ladungszustandsschwellenwert basierend auf der Batterietemperatur und dem Batteriezustand bestimmbar ist.

13. Vorrichtung nach einem der Ansprüche 9 bis 12, **dadurch gekennzeichnet, dass,** wenn mit Hilfe anderer Vergleichsmittel ein Unterschreiten des weiteren Drehzahlschwellenwerts durch die Verbrennungsmotor- oder Elektromaschinendrehzahl feststellbar ist, mittels des Steuergeräts (19) ein Öffnen des Schalters (14) und ein Aufladen des Kondensatorspeichers (10) auf einen Energiesollwert bewirkbar sind.

14. Vorrichtung nach einem der Ansprüche 9 bis 13, **dadurch gekennzeichnet, dass** mittels des Steuergeräts (19) das Aufladen der Batterie (12), während die Verbrennungsmotor- oder Elektromaschinendrehzahl größer als ein weiterer Drehzahlschwellenwert sind, fortsetzbar ist, bis der Ladungszustand der Batterie (12) einen oberen Ladungszustandsschwellenwert oder eine Ladungszustandsänderung Batterie (12) einen Ladungszustandsänderungsschwellenwert erreicht hat.

15. Vorrichtung nach einem der Ansprüche 9 bis 14, **dadurch gekennzeichnet, dass** der Kondensatorspeicher (10) und die Batterie (12) mittels eines DC/DC-Wandler (13) zum Austauschen von Energie in Abhängigkeit von dem mindestens einen Betriebsparameter und/oder den dynamischen Parametern des Hybridenergiespeichers (8) verbunden sind.

16. Vorrichtung nach einem der Ansprüche 9 bis 15, **gekennzeichnet durch** Mittel zum Begrenzen eines Ladestroms der Batterie (12), so dass eine maximale Ladeschlussspannung an der Batterie (12) nicht überschritten wird.

## Claims

1. Method for operation of a hybrid energy store (8) which comprises a battery (12) and a capacitor store (10), which are connected in parallel via a switch (14), by means of which the battery (12) can be disconnected from a connection of the hybrid energy store (8), in a vehicle (1) having a hybrid drive system (2) which comprises an internal combustion engine (3) and an electrical machine (5), by means of a controller (19), wherein at least one operating parameter of the hybrid drive system (2) and dynamic parameters of the hybrid energy store (8) are recorded or determined and the controller (19) reduces a voltage of the capacitor store (10) approximately to an end-of-charging voltage level of the battery (12) and closes the switch (14), as a function of the at least one operating parameter and the dynamic parameters, in operating states in which electric-motor operation of the electrical machine (5) is not possible or is highly improbable, such that the battery (12) is charged via the electrical connection via the closed switch (14), wherein the at least one operating parameter is an internal-combustion engine rotation speed or an electrical machine rotation speed, and the internal-combustion engine or electrical machine rotation speed is compared with a rotation speed threshold value, and the voltage is reduced and the switch (14) is closed only if the internal-combustion engine or electrical machine rotation speed are higher than the rotation speed threshold value, wherein the rotation speed threshold value is a predetermined speed of revolution greater than a maximum internal-combustion engine or electrical machine rotation speed for electrical boost operation.

2. Method according to Claim 1, **characterized in that** the dynamic parameters comprise a state of charge of the battery (12) and the voltage of the capacitor store (10), wherein the voltage of the capacitor store (10) is compared with the rated voltage level of the battery (12), and the voltage is reduced only if the voltage of the capacitor store (10) is above the end-of-charge voltage level of the battery (12), and the state of charge of the battery (12) is compared with a state of charge threshold value, and the switch (14) is closed only if the state of charge of the battery (12) is below the state of charge threshold value.

3. Method according to one of Claims 1 or 2, **characterized in that** the maximum internal-combustion engine or electrical machine rotation speed for electrical boost operation corresponds to a fixed percentage proportion of a rated rotation speed of the internal-combustion engine (3).

4. Method according to one of Claims 2 or 3, **characterized in that** a battery temperature and/or a battery state are/is recorded, and the state of charge threshold value is determined on the basis of the battery temperature and the battery state.

5. Method according to one of Claims 1 to 4, **characterized in that** the switch (14) is opened when the internal-combustion engine or electrical machine rotation speed undershoots the further rotation speed threshold value, and the capacitor store (10) is charged to a nominal energy value.

6. Method according to one of Claims 1 to 5, **characterized in that** the charging of the battery (12) while the internal-combustion engine or electrical machine rotation speed is greater than a further rotation speed threshold value is continued until the state of charge has reached an upper state of charge threshold value or a state of charge change has reached a state of charge change threshold value.

7. Method according to one of the preceding claims, **characterized in that** energy is interchanged between the capacitor store (10) and the battery (12) via a DC/DC converter (13), which connects the battery (12) and the capacitor store (10), as a function of the at least one operating parameter and/or of the dynamic parameters of the hybrid energy store (8).

8. Method according to one of the preceding claims, **characterized in that** a charging current of the battery (12) is limited such that a maximum end-of-charge voltage across the battery (12) is not exceeded.

9. Apparatus for operation of a hybrid energy store (8) which comprises a battery (12) and a capacitor store (10), which are connected in parallel via a switch (14), by means of which the battery (12) can be disconnected from a connection (11) of the hybrid energy store (8), in a vehicle (1) having a hybrid drive system (2) which comprises an internal combustion engine (3) and an electrical machine (5), comprising a controller (19), wherein at least one operating parameter of the hybrid drive system (2) and dynamic parameters of the hybrid energy store (8) can be recorded or determined and by means of the controller (19) a voltage of the capacitor store (10) can be reduced to a voltage level of the battery (12) and the switch (14) can be closed, as a function of the at least one operating parameter and the dynamic parameters, in operating states in which electric-motor operation of the electrical machine (5) is not possible or is highly improbable, such that the battery (12) is charged via the electrical connection via the closed switch (14), wherein the at least one operating parameter is an internal-combustion engine rotation speed or an electrical machine rotation speed, and the internal-combustion engine or electrical machine rotation speed can be compared with a rotation speed threshold value, and the voltage can be reduced and the switch (14) can be closed only if the internal-combustion engine or electrical machine rotation speed are higher than the rotation speed threshold value, wherein the rotation speed threshold value is a predetermined speed of revolution greater than a maximum internal-combustion engine or electrical machine rotation speed for electrical boost operation.

10. Apparatus according to Claim 9, **characterized in that** the dynamic parameters comprise a state of charge of the battery (12) and the voltage of the capacitor store (10), wherein the voltage of the capacitor store (10) can be compared with the voltage level of the battery (12), and the voltage can be reduced only if the voltage of the capacitor store (10) is above the voltage level of the battery (12), and the state of charge can be compared with a state of charge threshold value, and the switch (14) can be closed only if the state of charge is below the state of charge threshold value.

11. Apparatus according to one of Claims 9 or 10, **characterized in that** the maximum internal-combustion engine or electrical machine rotation speed for electrical boost operation corresponds to a fixed percentage proportion of a rated rotation speed of the internal-combustion engine (3).

12. Apparatus according to one of Claims 10 or 11, **characterized in that** a battery temperature can be determined by means of a temperature sensor, and/or a battery state can be determined by means for determining a battery state, and the state of charge threshold value can be determined by means for threshold value definition, based on the battery temperature and the battery state.

13. Apparatus according to one of Claims 9 to 12, **characterized in that** when a different comparison means finds that the internal-combustion engine or electrical machine rotation speed has undershot the further rotation speed threshold value, the controller (19) causes the switch (14) to be opened and the capacitor store (10) to be charged to a nominal energy value.

14. Apparatus according to one of Claims 9 to 13, **characterized in that** the charging of the battery (12) can be continued by means of the controller (19) while the internal-combustion engine or electrical machine rotation speed is greater than a further rotation speed threshold value, until the state of charge of the battery (12) has reached an upper state of charge threshold value, or a state of charge change of the battery (12) has reached a state of charge change threshold value.

15. Apparatus according to one of Claims 9 to 14, **characterized in that** the capacitor store (10) and the battery (12) are connected by means of a DC/DC converter (13) in order to interchange energy as a function of the at least one operating parameter and/or of the dynamic parameters of the hybrid energy store (8).

16. Apparatus according to one of Claims 9 to 15, **characterized by** means of limiting a charging current of the battery (12) such that a maximum end-of-charge voltage across the battery (12) is not exceeded.

## Revendications

1. Procédé pour faire fonctionner un accumulateur d'énergie hybride (8), qui comprend une batterie (12) et un accumulateur de condensateur (10), qui sont connectés en parallèle par le biais d'un commutateur (14), au moyen duquel la batterie (12) peut être séparée d'un raccord de l'accumulateur d'énergie hybride (8), dans un véhicule (1) ayant un système d'entraînement hybride (2) qui comprend un moteur à combustion interne (3) et une machine électrique (5), au moyen d'un appareil de commande (19), au moins un paramètre de fonctionnement du système d'entraînement hybride (2) et des paramètres dynamiques de l'accumulateur d'énergie hybride (8) étant détectés ou déterminés, et l'appareil de commande (19) provoquant, en fonction de l'au moins un paramètre de fonctionnement et des paramètres dynamiques, une diminution d'une tension de l'accumulateur de condensateur (10) approximativement à un niveau de tension finale de charge de la batterie (12), et une fermeture du commutateur (14) dans des états de fonctionnement dans lesquels un fonctionnement par moteur électrique de la machine électrique (5) n'est pas possible ou très peu probable, de sorte que la batterie (12) soit chargée par le biais de la connexion électrique au moyen du commutateur fermé (14), l'au moins un paramètre de fonctionnement étant un régime du moteur à combustion interne ou un régime de la machine électrique et le régime du moteur à combustion interne ou de la machine électrique étant comparé à une valeur seuil de régime et la diminution de la tension et la fermeture de l'interrupteur (14) ne s'effectuant que lorsque le régime du moteur à combustion interne ou de la machine électrique est supérieur à la valeur seuil de régime, la valeur seuil de régime étant supérieure d'un nombre de rotations prédéterminé à un régime maximum du moteur à combustion interne ou de la machine électrique pour un fonctionnement électrique de suralimentation.

2. Procédé selon la revendication 1, **caractérisé en ce que** les paramètres dynamiques incluent un état de charge de la batterie (12) et la tension de l'accumulateur de condensateur (10), la tension de l'accumulateur de condensateur (10) étant comparée au niveau de tension nominale de la batterie (12) et la réduction de la tension ne s'effectuant que lorsque la tension de l'accumulateur de condensateur (10) est au-dessus du niveau de tension finale de charge de la batterie (12), et l'état de charge de la batterie (12) étant comparé à une valeur seuil d'état de charge et la fermeture du commutateur (14) n'étant réalisée que lorsque l'état de charge de la batterie (12) est en dessous de la valeur seuil d'état de charge.

3. Procédé selon l'une quelconque des revendications 1 ou 2, **caractérisé en ce que** le régime maximum du moteur à combustion interne ou de la machine électrique pour le fonctionnement électrique de suralimentation correspond à une proportion en pourcentage fixée d'un régime nominal du moteur à combustion interne (3).

4. Procédé selon l'une quelconque des revendications 2 ou 3, **caractérisé en ce qu'**une température de fonctionnement et/ou un état de la batterie sont détectés et la valeur seuil de l'état de charge est déterminé sur la base de la température de la batterie et de l'état de la batterie.

5. Procédé selon l'une quelconque des revendications 1 à 4, **caractérisé en ce que** le commutateur (14) est ouvert lorsque le régime du moteur à combustion interne ou de la machine électrique est inférieur à l'autre valeur seuil de régime et l'accumulateur de condensateur (10) est chargé à une valeur de consigne d'énergie.

6. Procédé selon l'une quelconque des revendications 1 à 5, **caractérisé en ce que** la charge de la batterie (12) est poursuivie si le régime du moteur à combustion interne ou de la machine électrique est supérieur à une autre valeur seuil de régime, jusqu'à ce que l'état de charge ait atteint une valeur seuil supérieure d'état de charge ou qu'une variation de l'état de charge ait atteint une valeur seuil de variation d'état de charge.

7. Procédé selon l'une quelconque des revendications précédentes, **caractérisé en ce que** de l'énergie entre l'accumulateur de condensateur (10) et la batterie (12) est échangée par le biais d'un convertisseur CC/CC (13) reliant la batterie (12) et l'accumulateur de condensateur (10) en fonction de l'au moins un paramètre de fonctionnement et/ou des paramètres dynamiques de l'accumulateur d'énergie hybride (8).

8. Procédé selon l'une quelconque des revendications précédentes, **caractérisé en ce qu'**un courant de charge de la batterie (12) est limité, de sorte qu'une tension finale de charge de la batterie (12) ne soit pas dépassée.

9. Dispositif pour faire fonctionner un accumulateur d'énergie hybride (8), qui comprend une batterie (12) et un accumulateur de condensateur (10), qui sont connectés en parallèle par le biais d'un commutateur (14), au moyen duquel la batterie (12) peut être séparée d'un raccord (11) de l'accumulateur d'énergie hybride (8), dans un véhicule (1) ayant un système d'entraînement hybride (2) qui comprend un moteur à combustion interne (3) et une machine électrique (5), comprenant un appareil de commande (19), au moins un paramètre de fonctionnement du système d'entraînement hybride (2) et des paramètres dynamiques de l'accumulateur d'énergie hybride (8) pouvant être détectés ou déterminés, et au moyen de l'appareil de commande (19), en fonction de l'au moins un paramètre de fonctionnement et des paramètres dynamiques, une réduction d'une tension de l'accumulateur de condensateur (10) à un niveau de tension de la batterie (12) et une fermeture du commutateur (14) pouvant s'effectuer dans des états de fonctionnement dans lesquels un fonctionnement par moteur électrique de la machine électrique (5) n'est pas possible ou très peu probable, de sorte que la batterie (12) puisse être chargée par le biais de la connexion électrique au moyen du commutateur fermé (14), l'au moins un paramètre de fonctionnement étant un régime du moteur à combustion interne ou un régime de la machine électrique et le régime du moteur à combustion interne ou de la machine électrique pouvant être comparé à l'aide de moyens de comparaison à une valeur seuil de régime, et la réduction de la tension et la fermeture du commutateur (14) ne pouvant s'effectuer que lorsque le régime du moteur à combustion interne ou de la machine électrique est supérieur à la valeur seuil de régime, la valeur seuil de régime étant supérieure d'un nombre de rotations prédéterminé à un régime maximum du moteur à combustion interne ou de la machine électrique pour un fonctionnement électrique de suralimentation.

10. Dispositif selon la revendication 9, **caractérisé en ce que** les paramètres dynamiques incluent un état de charge de la batterie (12) et la tension de l'accumulateur de condensateur (10), la tension de l'accumulateur de condensateur (10) pouvant être comparée, à l'aide d'autres moyens de comparaison, au niveau de tension de la batterie (12) et la réduction de la tension ne pouvant s'effectuer que lorsque la tension de l'accumulateur de condensateur (10) est au-dessus du niveau de tension de la batterie (12), et l'état de charge pouvant être comparé, à l'aide d'autres moyens de comparaison, à une valeur seuil d'état de charge et la fermeture du commutateur (14) ne pouvant être effectuée que lorsque l'état de charge est en dessous de la valeur seuil d'état de charge.

11. Dispositif selon l'une quelconque des revendications 9 ou 10, **caractérisé en ce que** le régime maximum du moteur à combustion interne ou de la machine électrique pour le fonctionnement électrique de suralimentation correspond à une proportion en pourcentage fixe d'un régime nominal du moteur à combustion interne (3).

12. Dispositif selon l'une quelconque des revendications 10 ou 11, **caractérisé en ce qu'**au moyen d'un capteur de température, on peut déterminer une température de la batterie, et/ou on peut déterminer un état de la batterie à l'aide de moyens pour déterminer un état de la batterie, et on peut déterminer la valeur seuil d'état de charge sur la base de la température de la batterie et de l'état de la batterie, à l'aide de moyens pour établir une valeur seuil.

13. Dispositif selon l'une quelconque des revendications 9 à 12, **caractérisé en ce que,** si l'on peut constater à l'aide d'autres moyens de comparaison, que le régime du moteur à combustion interne ou de la machine électrique est en dessous de l'autre valeur seuil de régime, on peut provoquer au moyen de l'appareil de commande (19) une ouverture du commutateur (14) et une charge de l'accumulateur de condensateur (10) à une valeur de consigne d'énergie.

14. Dispositif selon l'une quelconque des revendications 9 à 13, **caractérisé en ce qu'**au moyen de l'appareil de commande (19), la charge de la batterie (12) peut se poursuivre, lorsque le régime du moteur à combustion interne ou de la machine électrique est supérieur à une autre valeur seuil de régime, jusqu'à ce que l'état de charge de la batterie (12) ait atteint une valeur seuil supérieure d'état de charge ou qu'une variation d'état de charge de la batterie (12) ait atteint une valeur seuil de variation d'état de charge.

15. Dispositif selon l'une quelconque des revendications 9 à 14, **caractérisé en ce que** l'accumulateur de condensateur (10) et la batterie (12) sont connectés au moyen d'un convertisseur CC/CC (13) pour le remplacement d'énergie en fonction de l'au moins un paramètre de fonctionnement et/ou des paramètres dynamiques de l'accumulateur d'énergie hybride (8).

16. Dispositif selon l'une quelconque des revendications 9 à 15, **caractérisé par** des moyens pour limiter un courant de charge de la batterie (12), de sorte qu'une tension finale de charge de la batterie (12) ne soit pas dépassée.
